# DEMANDE DE BREVET EUROPEEN

(11) **EP 3 839 819 A1**
(43) Date de publication de la demande: **23.06.2021**
(21) Numéro de dépôt: 20215310.2
(22) Date de dépôt: 18.12.2020
(51) Int. Cl.: G06K 9/20, G06K 9/00

(54) **ASSISTANT ET PROCEDE D'ASSISTANCE DE RECHERCHE D'UN ELEMENT DANS UNE ZONE**

(30) Priorité: 20.12.2019 FR 1915087
(71) Demandeur: ORANGE, 75015 Paris (FR)
(72) Inventeur: PELLEN, Nicolas, 92326 CHÂTILLON CEDEX (FR); ESNAULT, Régis, 92326 CHÂTILLON CEDEX (FR); GREGOIRE, Christian, 92326 CHÂTILLON CEDEX (FR)

(57) **Abrégé**

L'invention concerne l'assistance ou guidage d'un utilisateur dans la détection d'un élément dans une zone.

Un objet de l'invention est un assistant de recherche d'un élément dans une zone, l'assistant de recherche comportant un modificateur de direction d'émission d'un signal visible en fonction de données relatives détectées d'un élément recherché dans la zone au moyen d'au moins un capteur parmi un capteur audio et un capteur vidéo.

Ainsi, l'assistant de recherche utilise un simple signal visible pour guider vers l'élément recherché dans la zone. La technologie utilisée est donc une technologie simple à mettre en œuvre, peu coûteuse et facile d'accès permettant une précision dans le guidage dépendant uniquement de la précision de la localisation connue ou détectée de l'objet recherché.

## Description

### Domaine technique

L'invention concerne l'assistance ou guidage d'un utilisateur dans la détection d'un élément dans une zone.

### État de la technique

Que ce soit à son domicile ou dans un contexte d'entreprise ou industriel, lorsqu'une personne recherche un élément : objet, source d'émission, localisation particulière..., il est difficile pour cette personne de trouver cet élément même si elle a connaissance du lieu où se trouve l'élément.

Cette difficulté peut être lié au fait que l'élément est caché par autre chose, par exemple une clef dans un sac à main ou glissée sous une enveloppe sur une console d'entrée. Alors, la personne recherchant la clef ne la voit pas.

Une autre raison à cette difficulté peut être que la personne dispose de coordonnées de localisation de l'emplacement de l'élément mais pas de référence ou d'outils de mesures. La personne sait peut être que l'élément se trouve à 2,5m mais ne dispose pas d'un mètre sous la main.

La difficulté peut être aussi dû au fait que le détecteur d'objet ne fournit pas d'information sur la position de l'objet recherché mais seulement une information concernant l'environnement de l'objet recherché. Par exemple, la demande de brevet japonaise JP201803223 propose un robot d'assistance recherchant un objet perdu et notifiant la personne de la détection de l'objet au moyen d'une photographie de l'objet recherché dans son environnement.

La difficulté peut aussi être due à l'imprécision de la détection de l'objet. Notamment, lorsque l'objet est détecté en utilisant un signal soit émis par l'objet soit réfléchi par l'objet. La personne peut avoir un appareil de détection de l'objet apte à recevoir ce signal mais la localisation de la source est parfois large car plus le détecteur est loin de l'objet plus l'arc de l'angle d'émission est large.

En outre, les systèmes existants de localisation n'ont pas toujours des précisions suffisantes : précision au mètre près alors que la personne recherche un élément de quelques centimètres à peine ; coordonnées dans un espace à deux dimensions alors que l'élément recherché peut aussi bien être tombé au sol, placé sur une table ou accroché à un mur (la personne recherchera peut être uniquement sur un meuble situé à la position indiqué par le système de localisation alors que l'élément recherché est tombé au sol derrière ce meuble. Ces systèmes de localisation nécessitent en outre que la personne se déplace avec le système de localisation pour déterminer où se trouve la localisation de l'élément recherché. Or, cela n'est pas toujours possible suivant l'encombrement de la zone de recherche, le type de zone de recherche (pour des raisons de sécurité), etc.

Afin de pallier certaines difficultés, des robots-guides recherche l'objet perdu et accompagnent la personne jusqu'à l'objet retrouvé comme proposé par la demande de brevet américaine US20080215184. Si ces robots pallient certaines difficultés, ils sont des outils complexes et onéreux pour simplement retrouver les clés de la maison. En outre, ils ne sont adaptés :
- ni à la détection d'objets à différentes hauteurs,
- ni à des zones fortement encombrées,
- ni à des zones dans lesquelles les déplacements sont limités pour des raisons de sécurités.

### Exposé de l'invention

Un des buts de la présente invention est de remédier à des inconvénients de l'état de la technique.

Un objet de l'invention est un assistant de recherche d'un élément dans une zone, l'assistant de recherche comportant un modificateur de direction d'émission d'un signal visible en fonction de données relatives détectées d'un élément recherché dans la zone au moyen d'au moins un capteur parmi un capteur audio et un capteur vidéo.
Ainsi, l'assistant de recherche utilise un simple signal visible pour guider vers l'élément recherché dans la zone. La technologie utilisée est donc une technologie simple à mettre en œuvre, peu coûteuse et facile d'accès permettant une précision dans le guidage dépendant uniquement de la précision de la localisation connue ou détectée de l'objet recherché.
En outre, l'assistant de recherche peut ainsi guider vers tout élément recherché, en particulier des éléments recherchés qui ne sont pas équipés d'étiquette RFID ou autre émetteur de signaux radio : Bluetooth™, Wifi™, hertzien, etc.

Avantageusement, l'assistant de recherche comporte un émetteur du signal visible parmi les émetteurs suivants :
- un émetteur du signal visible mobile en rotation implémentant le modificateur de direction,
- outre le modificateur de direction d'émission, un émetteur fixe du signal visible.
Ainsi, l'assistant de recherche est un outil complet gérant le pointage de l'élément recherché au moyen du signal visible de bout en bout ce qui permet éventuellement de modifier le signal visible. Alors, outre la désignation par pointage à distance de l'élément recherché, l'assistant de recherche peut intégrer au signal visible un ou plusieurs informations relatives à la détection (type d'élément recherché, visibilité de l'élément recherché, précision de la détection, etc.) en modifiant un ou plusieurs paramètres du signal visible, tel qu'une puissance lumineuse, une modulation de la luminosité du signal, un balayage d'une partie ciblée de la zone, etc.

Avantageusement, le modificateur de direction est un ou plusieurs des dispositifs suivants :
- un support mobile en rotation apte à recevoir un émetteur fixe du signal visible, le support mobile étant apte à modifier la position de l'émetteur fixe,
- un dispositif optique apte à modifier la direction du signal visible en fonction de l'élément recherché dans la zone.

Avantageusement, la mobilité en rotation est l'une des mobilités en rotation suivantes :
- une mobilité en rotation par rapport à un ou plusieurs axes donnés ;
- une mobilité en rotation par rapport à un point.

Avantageusement, au moins un paramètre du signal visible émis est fonction d'au moins un paramètre relatif à l'élément recherché.

Avantageusement, l'assistant de recherche comporte un contrôleur de la rotation de l'émetteur mobile en fonction d'un élément recherché dans la zone.

Avantageusement, l'assistant de recherche comporte un détecteur d'un élément recherché dans la zone, le détecteur d'élément recherché étant apte à commander une rotation de l'émetteur mobile en fonction de l'élément recherché détecté.

Avantageusement, le signal visible est un signal visible virtuel affiché par un casque de réalité augmenté, et l'élément recherché un élément réel d'une zone réelle.

Un autre objet de l'invention est un assistant vocal apte à fournir une réponse à une commande vocale, l'assistant vocal comportant en outre un modificateur de direction d'émission d'un signal visible en fonction de données relatives détectées d'un élément recherché dans une zone au moyen d'au moins un capteur parmi un capteur audio et un capteur vidéo.

Un objet de l'invention est aussi un système de supervision d'une zone apte détecter au moins un élément dans la zone, le système de supervision comportant en outre un modificateur de direction d'émission d'un signal visible en fonction de données relatives détectées d'un élément recherché dans une zone au moyen d'au moins un capteur parmi un capteur audio et un capteur vidéo.

Un objet de l'invention est encore un procédé d'assistance de recherche d'un élément dans une zone avec un signal visible, le procédé d'assistance de recherche comportant une modification de direction d'émission d'un signal visible en fonction de données relatives détectées d'un élément recherché dans une zone au moyen d'au moins un capteur parmi un capteur audio et un capteur vidéo.

Avantageusement, le procédé d'assistance de recherche comporte en outre une détection de l'élément recherché fournissant au moins un paramètre relatif à une position de l'élément recherché.

Avantageusement, le procédé d'assistance de recherche comporte une détection de l'élément recherché, la détection étant d'un mode déterminé en fonction du type d'élément recherché et fournissant au moins paramètre relatif à une position de l'élément recherché.

Avantageusement, le procédé d'assistance de recherche comporte une détection de l'élément recherché commandant la modification de direction du signal visible émis.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un assistant de recherche et étant conçus pour commander l'exécution des différentes étapes de ce procédé.

L'invention vise donc aussi un programme comprenant des instructions de code de programme pour l'exécution des étapes du procédé d'assistance de recherche d'un élément selon l'invention lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

### Brève description des dessins

Les caractéristiques et avantages de l'invention apparaîtront plus clairement à la lecture de la description, faite à titre d'exemple, et des figures s'y rapportant qui représentent :
[Fig 1] Figure 1, un schéma-bloc simplifié d'un assistant de recherche selon l'invention,
[Fig 2a] Figure 2a, un schéma simplifié d'un premier mode de réalisation d'un émetteur mobile d'un signal visible selon l'invention,
[Fig 2b] Figure 2b, un schéma simplifié d'un deuxième mode de réalisation d'un émetteur mobile d'un signal visible selon l'invention,
[Fig 3] Figure 3, un schéma simplifié d'un mode de réalisation d'un assistant de recherche selon l'invention,
[Fig 4a] Figure 4a, un schéma simplifié d'un premier mode de réalisation d'un système implémentant un assistant de recherche selon l'invention,
[Fig 4b] Figure 4b, un schéma simplifié d'un deuxième mode de réalisation d'un système implémentant un assistant de recherche selon l'invention,
[Fig 4c] Figure 4c, un schéma simplifié d'un troisième mode de réalisation d'un système implémentant un assistant de recherche selon l'invention,
[Fig 5] Figure 5, un schéma-bloc simplifié d'un procédé d'assistance de recherche selon l'invention.

### Description des modes de réalisation

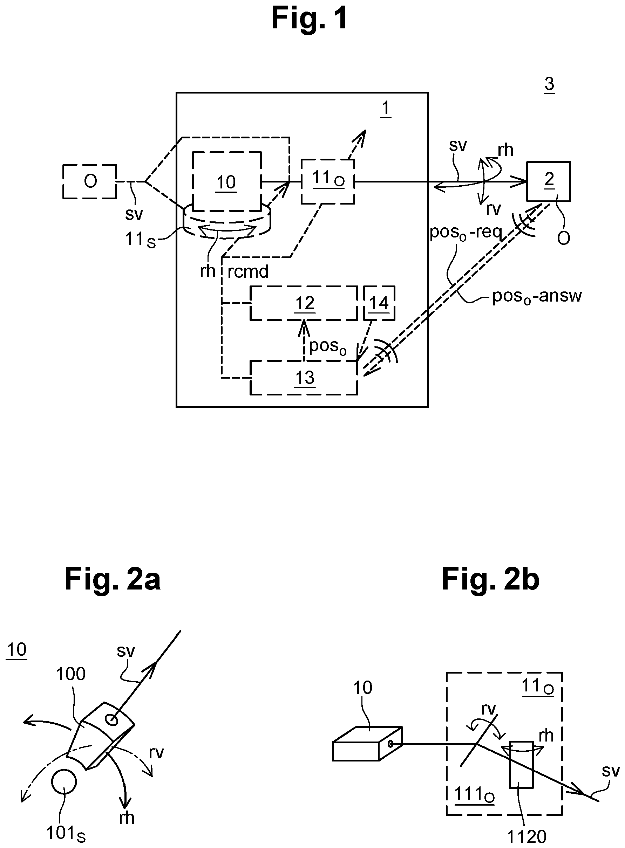

La figure 1 illustre un schéma-bloc simplifié d'un assistant de recherche selon l'invention.

L'assistant de recherche 1 est apte à rechercher et à trouver un élément 2 dans une zone 3. L'assistant de recherche 1 comporte un modificateur 11_{S}, 11_{O} de direction d'émission d'un signal visible *sv* en fonction de données relatives détectées d'un élément 2 recherché dans la zone 3 au moyen d'au moins un capteur parmi un capteur audio et un capteur vidéo.

En particulier, l'assistant de recherche 1 comporte un émetteur 10 du signal visible *sv* parmi les émetteurs suivants :
- un émetteur du signal visible mobile en rotation implémentant le modificateur de direction,
- outre le modificateur de direction d'émission 11_{S}, 11_{O}, un émetteur fixe du signal visible.

De manière alternative, la source 0 du signal visible n'est pas implémenté dans l'assistant de recherche 1. Soit, le modificateur 11_{S}, 11_{O} de direction est, éventuellement, positionné sur le trajet du signal visible *sv* pour modifier sa direction notamment dans le cas où le modificateur de direction est un dispositif optique 11_{O} apte à modifier la direction du signal visible *sv*. Soit le modificateur 11_{S}, 11_{O} de direction est, éventuellement, relié physiquement à la source 0 pour modifier la direction du signal visible émis notamment dans le cas où le modificateur de direction est un support mobile 11_{S} en rotation apte à recevoir une source 0 du signal visible.

En particulier, le modificateur de direction est un ou plusieurs des dispositifs suivants :
- un support mobile 11_{S} en rotation apte à recevoir un émetteur fixe 10 du signal visible, le support mobile 11_{S} étant apte à modifier la position de l'émetteur fixe 10,
- un dispositif optique 11_{O} apte à modifier la direction du signal visible *sv* en fonction de l'élément recherché 2 dans la zone 3.

Par exemple, le support mobile est constitué d'une base adaptée pour être poser sur une surface horizontale (sol, table, meuble, etc.) ou apposer à une surface verticale (mur, paroi verticale d'un meuble, etc.) ou sous une surface horizontale (plafond, poutre d'une structure, etc.).

En particulier, la mobilité en rotation rh, rv est l'une des mobilités en rotation suivantes :
- une mobilité en rotation par rapport à un ou plusieurs axes donnés ;
- une mobilité en rotation par rapport à un point.
Ainsi, l'assistant de recherche 1 est apte à émettre un signal visible sv dont la direction est mobile en rotation horizontalement *rh* et verticalement *rv.*

En particulier, au moins un paramètre du signal visible émis *sv* est fonction d'au moins un paramètre relatif à l'élément recherché 2.

Par exemple, l'un des paramètres du signal visible peut indiquer que l'élément recherché est sous un autre élément pointé par le signal visible. Notamment, par une oscillation entre deux couleurs du signal visible ou un clignotement du signal visible, etc.

En particulier, l'assistant de recherche 1 comporte un contrôleur 12 de la rotation rv, rh de l'émetteur mobile en fonction d'un élément recherché 2 dans la zone 3.

En particulier, l'assistant de recherche 1 comporte un détecteur 13 d'un élément recherché 2 dans la zone 3. Le détecteur 13 d'élément recherché est apte à commander une rotation de l'émetteur mobile en fonction de l'élément recherché détecté 2.

En particulier, l'assistant de recherche 1 comporte un ou plusieurs capteurs 14 apte à surveiller la zone 3 et/ou à rechercher de manière spécifique l'objet 2 dans la zone 3. Le capteur 14 est au moins l'un des dispositifs parmi les suivant : caméra, microphone, récepteur WAN, tel qu'un récepteur Bluetoot™, WiFi™... En particulier, le capteur 14 est implémenté dans le détecteur 13 (non illustré).

Notamment, lorsque l'objet 2 est un dispositif de communication, le capteur est apte à recevoir un signal de réponse de l'objet 2 pos_{O}_answ suite la réception par l'objet 2 d'une requête de position pos_{O}_req émis par l'assistant de recherche 1.

Eventuellement, le détecteur 13 implémente un analyseur (non illustré) mettant en œuvre des fonctions de reconnaissance d'image et/ou de son respectivement de signaux vidéo provenant d'un ou plusieurs capteurs 14 de type caméras et/ou de signaux sonores provenant d'un ou plusieurs capteurs 14 de type microphones.

En particulier, le détecteur 13 fournit, outre la position détectée poso, une information supplémentaire tel que la précision de la position détectée, la vraisemblance de la détection, la visibilité de l'élément recherché (visible ou masqué par un ou plusieurs autres éléments...), etc. Ainsi, par exemple, l'un des paramètres du signal visible peut indiquer que la précision de la position fournie de l'élément recherché 2 est de quelques centimètres. Notamment, le signal visible peut pointer la position détectée puis balayer rapidement un segment égal à l'écart de précision autour de cette position, ou le signal visible peut être constitué d'un premier faisceau avec une première puissance lumineuse marquant un premier cercle autour de l'élément recherché 2 dont le rayon est fonction de l'écart de précision, et d'un deuxième faisceau plus fin avec une deuxième puissance lumineuse (plus intense par exemple) point la position détectée de l'élément recherché 2, etc.

En particulier, le signal visible *sv* est un signal visible virtuel affiché par un casque de réalité augmenté (non illustré), et l'élément recherché un élément réel 2 d'une zone réelle 3.

Dans ce cas, le signal visible *sv* est représenté sur l'écran du casque de réalité augmenté. Le signal visible *sv* affiché par le casque de réalité augmenté 1 pointe pour l'utilisateur U porteur du casque un élément recherché 2 de la zone réelle 3 visible par l'utilisateur U au travers de l'écran du casque 1.

La figure 2a illustre un schéma simplifié d'un premier mode de réalisation d'un émetteur mobile d'un signal visible selon l'invention.

Dans ce cas, l'émetteur 10 est un émetteur mobile en rotation. Il est constitué d'une source de signal visible 100, tel qu'une source lumineuse, notamment une source laser. La source 100 est mobile autour d'une sphère de rotation 101_{S}. Par exemple, la mobilité en rotation autour de la sphère est réalisé au moyen de roulement à bille (non illustré) placé entre la sphère de rotation 101_{S} et la source 100.

L'avantage d'un tel émetteur mobile en rotation est de permettre une rotation autour du centre de la sphère dans n'importe quelle direction du signal visible *sv* émis par la source 100, notamment une rotation horizontale *rh* et/ou une rotation verticale *rv.*

La figure 2b illustre un schéma simplifié d'un deuxième mode de réalisation d'un émetteur mobile d'un signal visible selon l'invention.

Dans ce cas, l'émetteur 10 est fixe. Et, un modificateur de direction 11_{O} est placé sur le trajet dun signal visible *sv* émis par l'émetteur 10. Notamment, le modificateur de direction est un dispositif optique, par exemple constitué de lentille(s) optique(s) 111_{O}, 112_{O}. Notamment, une première lentille 111_{O} permet de modifier la direction du signal visible sur un axe verticale *rv,* et une deuxième lentille 112_{O} permet de modifier la direction du signal visible sur un axe horizontale *rh.* Ainsi, en contrôlant les deux lentilles 111_{O}, 112_{O}, la direction du signal visible *sv* peut être déviée verticalement et/ou horizontalement.

Le modificateur de direction peut aussi comporter un ou plusieurs miroirs (non illustré) afin que la direction du signal visible puisse être déviée vers la partie de la zone dans et/ou devant laquelle se situe la source 10.

Ainsi quel que soit le mode de réalisation du modificateur de direction 10, 11_{O}, 11_{S}, qu'il soit ou non intégré dans un émetteur mobile de signal visible, l'assistant de recherche 1 placé dans une zone 3 permet de pointer un élément recherché 2 quel que soit sa position dans la zone 3 devant ou derrière la source du signal visible 0, 10, du sol au plafond.

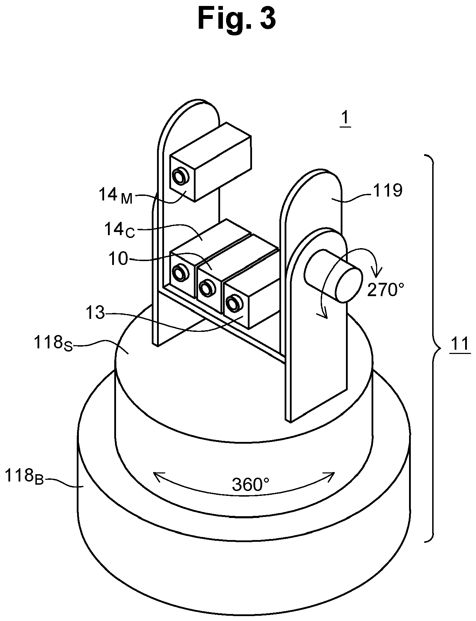

La figure 3 illustre un schéma simplifié d'un mode de réalisation d'un assistant de recherche selon l'invention.

L'assistant de recherche 1, aussi nommé pointeur « GéoTrouveTout » est constitué d'un modificateur de direction 11. Notamment, le modificateur de direction 11 comporte une base 118_{B} apte à être poser sur une surface horizontale tel que le sol, une table, un meuble, etc. et un plateau tournant 118_{S} autour d'un axe verticale permettant une rotation horizontale à 360°. Eventuellement, le plateau tournant 118_{S} est couplé à une nacelle mobile 119 autour d'un axe horizontale permettant une rotation verticale à 270°.

Le plateau tournant 118_{S} ou, le cas échant, la nacelle mobile 119 est apte à recevoir au moins un émetteur tel qu'un pointeur laser 10. En particulier, l'assistant de recherche 1 comporte l'émetteur 10. Ainsi, la combinaison de la base 118_{B}, du plateau tournant 118_{S}, de l'émetteur 10 et le cas échant, la nacelle mobile 119 constitue un émetteur mobile de signal visible.

Notamment, l'assistant de recherche 1 est composé le mobilisateur de direction 11, tel qu'un bras articulé robotisé, un contrôleur 12, telle qu'une centrale inertielle de positionnement, de détecteurs 13 et/ou capteurs 14, 14_{M}, 14_{C} de différentes sortes éventuellement selon le but recherché (microphones14_{M}, caméras 14_{C}, capteurs, télémètres 13, etc.) et d'un émetteur de signal visible *sv*: tel qu'un pointeur laser 10.

L'assistant de recherche 1 peut déterminer la position à pointer par le signal visible pour pointer l'élément recherché 2 grâce à différentes données.

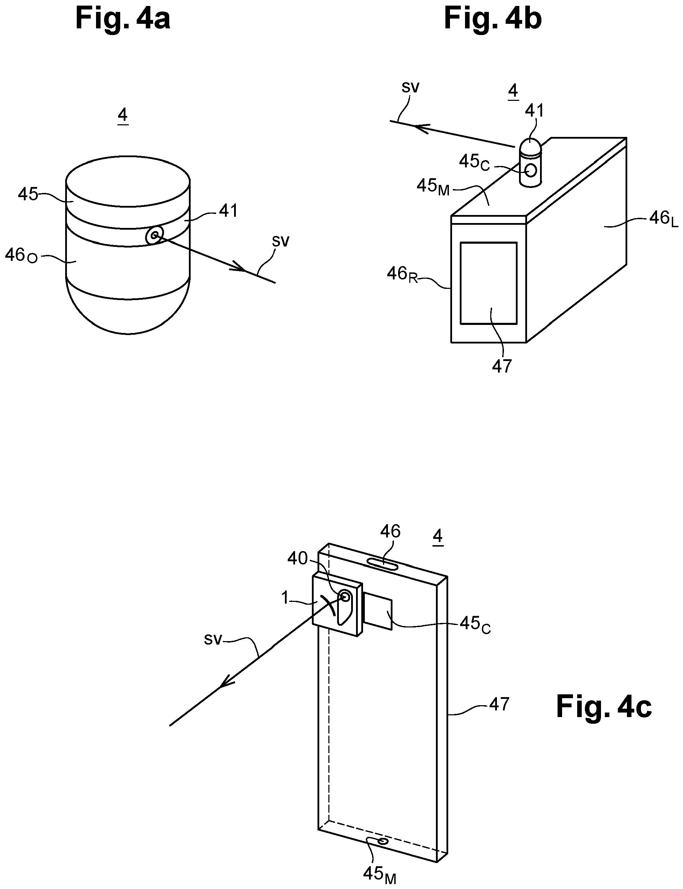

Notamment, les données utilisées pour déterminer la position à pointer par le signal visible sont des coordonnées de l'élément recherché 2 (notamment, les coordonnées sont connues de l'élément recherché 2 et/ou d'un dispositif de supervision 4 (tel qu'illustré par la figure 4b) de la zone 3 et fournies à l'assistant recherche 1. Dans ce cas, l'assistant de recherche 1 utilise en outre des données de position de la source 10 et/ou du modificateur de direction 11 pour déterminer, préalablement à la position à pointer par le signal visible, la position de l'élément recherché 2 relativement à la source 10 et/ou au modificateur de direction 11.

Et/ou, les données utilisées pour déterminer la position à pointer par le signal visible sont, par exemple, un signal sonore émis par l'élément recherché (un bruit émis par un objet). Dans ce cas, l'assistant de recherche comporte un analyseur (non illustré) de signal sonore apte à identifier un élément par reconnaissance sonore. Cet analyseur fonctionne dans un lieu bruité grâce à un séparateur et localisateurs de sources sonores. Ainsi, l'analyseur fournit des données relatives à l'élément recherché 2 en fonction de signaux sonores émis par l'élément recherché ultérieurement à la demande de recherche de cet élément 2. Eventuellement, les données fournies par l'analyseur suite au traitement des signaux sonores sont enregistrés dans une base de données de la zone 3 permettant, ainsi, à l'assistant de recherche d'utiliser en outre les informations liés à des signaux sonores émis par l'élément recherché 2 préalablement à la demande de recherche de cet élément 2.

Et/ou, les données utilisées pour déterminer la position à pointer par le signal visible sont, notamment, un signal vidéo capté de la zone 3 par exemple en utilisant une ou plusieurs caméras 14c (caméra infrarouge, caméra ultraviolet et/ou caméra visible, etc.) et/ou détecteur(s) de tout autre rayonnement diffusé (gammes d'ondes non visibles ou visibles diffractées, etc.). Dans ce cas, l'assistant de recherche comporte un analyseur (non illustré) de signal vidéo apte à identifier un élément recherché par reconnaissance, notamment reconnaissance visuelle ou reconnaissance d'image de l'élément recherché dans les signaux vidéo. Ainsi, l'analyseur fournit des données relatives à l'élément recherché 2 en fonction de signaux vidéo captés ultérieurement à la demande de recherche de l'élément recherché 2. Eventuellement, les données fournies par l'analyseur suite au traitement des signaux vidéo sont enregistrés dans une base de données de la zone 3 permettant, ainsi, à l'assistant de recherche d'utiliser en outre les informations liés à des signaux vidéo captés préalablement à la demande de recherche de l'élément recherché 2.

En particulier, le fonctionnement de l'assistant de recherche 1 et notamment le contrôle du modificateur de direction 11 est rendu possible grâce à un analyseur d'une masse d'informations de contexte enregistrées et/ou captées. Notamment, l'analyseur met en œuvre une intelligence artificielle pour retrouver dans ces informations l'élément recherché 2 et transmettre à un contrôleur 12 du modificateur de direction 11 la position retrouvé de l'élément recherché 2.

L'assistant de recherche 1 permet de matérialiser aux yeux d'un utilisateur U un élément recherché 2, telle qu'une position à percer, une source d'émission invisible ou non localisée, un objet masqué par au moins un autre élément en le pointant avec le signal visible *sv*.

Eventuellement, l'assistant de recherche comporte un télémètre 13 apte à détecter la position de l'élément recherché 2 pour commander le plateau tournant motorisé 118s et/ou la nacelle mobile 119. Ainsi, l'assistant de recherche 1 permet de pointer automatiquement l'élément recherché 2 détecté par le télémètre 13.

En outre, l'assistant de recherche comporte, notamment, un ou plusieurs capteurs, tel que microphone(s) 14_{M} et/ou caméra(s) 14_{C}. Les capteurs 14_{M}, 14_{C} sont apte à fournir au détecteur 13 des données permettant de positionner l'élément recherché 2, par exemple par reconnaissance sonore et/ou d'image.

Ainsi, l'assistant de recherche 1 permet de pointer l'emplacement de l'élément recherché 2 à l'aide d'un viseur 10, par exemple de type laser, automatiquement dirigé à l'aide d'un modificateur de direction, par exemple d'un bras robotisé manipulable 118_{B}, 118_{S}, 119. L'assistant de recherche 1 indique donc au moyen du signal visible *sv* une direction et un emplacement à laquelle se trouve l'élément recherché 2. Ainsi, l'élément recherché 2 est dès lors repérable par un utilisateur U à distance.

La figure 4a illustre un schéma simplifié d'un premier mode de réalisation d'un système implémentant un assistant de recherche selon l'invention.

Le système 4 est notamment un assistant vocal apte à fournir une réponse à une commande vocale, tel que les enceintes intelligentes Google Home™, Djingo Speaker™, Amazon Echo™, Apple HomePod™, etc.

L'assistant vocal 4 comporte en outre un modificateur (non illustré) de direction d'émission d'un signal visible *sv* en fonction de données relatives détectées d'un élément recherché 2 dans une zone 3 au moyen d'au moins un capteur parmi un capteur audio et un capteur vidéo.

En particulier, l'assistant vocal 4 comporte au moins un microphone 45 apte à capter les commandes vocales données par un utilisateur U, et au moins un hautparleur 46_{O} apte à reproduire au moyen d'un signal vocal une réponse à la commande vocale captée par le microphone 45. La réponse est soit un accusé de la commande vocale capté par le microphone 45, soit une réponse à une question comprise dans la commande vocale et traitée par un processeur implémenté soit dans l'assistant vocal soit dans un équipement de communication distant, notamment dans un réseau de communication (par exemple dans le « cloud » en anglais).

Dans ce dernier cas, l'assistant vocal 4 comporte un émetteur apte à transmettre la question à l'équipement de communication et un récepteur apte à recevoir la réponse de l'équipement de communication.

Dans le cas, où la commande vocale est destinéz à contrôler un dispositif électronique tiers, l'assistant vocal comporte au moins un émetteur apte à transmettre la commande soit à un contrôleur du dispositif électronique tiers, soit directement au dispositif électronique tiers. Le dispositif électronique tiers est situé soit dans la zone 3, soit dans le même réseau de communication domestique que l'assistant vocal 4, soit à distance et connecté à l'assistant vocal via un réseau de communication distant mobile ou Internet.

En particulier, l'assistant vocal 4 comporte un assistant de recherche 41 implémentant le modificateur de direction de signal visible *sv*. L'assistant de recherche 41 reçoit notamment une requête de recherche par commande vocale captée par le microphone 45 de l'assistant vocal 4. Cette requête déclenche l'assistant de recherche 41 qui commande un détecteur de l'élément recherché notamment en utilisant le microphone 45 de l'assistant vocal lorsque le détecteur comporte un analyseur de son. L'élément recherché est alors identifié dans la zone 3 par le son qu'il produit ou qu'il a produit ultérieurement à la requête. En fonction des résultats fournis par le détecteur l'émetteur mobile 41 est déplacé dans une direction déterminée. Le signal visible *sv* émis alors par l'émetteur mobile 41 pointe l'élément recherché 2.

Dans l'exemple illustré par la figure 4a, le modificateur de direction permet d'effectuer une rotation horizontale du signal visible à 360° et une rotation verticale du signal visible à seulement 180° à l'extérieur de l'assistant vocal constitué sur la figure par un cylindre. Il subsiste une zone blanche de visibilité dans cet exemple au-dessus du cylindre. En modifiant l'assistant de recherche tel que l'émetteur ressorte du cylindre constituant l'assistant vocal, cette zone blanche pourra être réduite puisque la rotation verticale aura un angle supérieur à 180°.

La figure 4b illustre un schéma simplifié d'un deuxième mode de réalisation d'un système implémentant un assistant de recherche selon l'invention.

Le système 4 est notamment un système de supervision d'une zone apte détecter au moins un élément dans la zone 3. Le système de supervision 4 comporte en outre un modificateur (non illustré) de direction d'émission d'un signal visible *sv* en fonction de données relatives détectées d'un élément recherché 2 dans une zone 3 au moyen d'au moins un capteur parmi un capteur audio et un capteur vidéo.

En particulier, le système de supervision de zone 4 comporte plusieurs capteurs : microphones 45_{M}, caméras 45_{C}, etc. apte à fournir des signaux à un analyseur (non illustré) pour déterminer par reconnaissance des événements se produisant dans la zone 3, notamment ouverture/fermeture de porte, clef posée sur la console d'entrée, mise en marche du lave-vaisselle, etc. Le système de supervision de zone utilise les événements déterminés pour commander un ou plusieurs appareils locaux ou à distance (notamment arrêt/démarrage, fermeture, notification de terminaux de communication, etc.), et éventuellement informer un utilisateur soit par synthèse vocale au moins de haut-parleurs 46_{R}, 46_{L} et/ou d'un afficheur 47, tel qu'une matrice d'affichage, un ou plusieurs LEDs, un écran, etc.

En particulier, le système de supervision de zone 4 comporte un assistant de recherche 41 implémentant le modificateur de direction de signal visible *sv*. L'assistant de recherche 41 reçoit notamment une requête de recherche par commande vocale captée par le microphone 45 du système de supervision de zone 4. Cette requête déclenche l'assistant de recherche 41 qui commande un détecteur de l'élément recherché, par exemple implémenté dans le système de supervision de zone 4, notamment en utilisant le microphone 45 et/ou la caméra 45_{C} du système de supervision de zone lorsque le détecteur comporte un analyseur de son, voire commande l'analyseur de son du système de supervision de zone 4. L'élément recherché est alors identifié dans la zone 3 par le son qu'il produit ou qu'il a produit ultérieurement à la requête et/ou une image captée dans la zone 3 préalablement ou ultérieurement à la requête. En fonction des résultats fournis par le détecteur/l'analyseur, l'émetteur mobile 41 est déplacé dans une direction déterminée. Le signal visible *sv* émis alors par l'émetteur mobile 41 pointe l'élément recherché 2.

Dans l'exemple illustré par la figure 4b, le modificateur de direction permet d'effectuer une rotation horizontale du signal visible à 360° et une rotation verticale du signal visible à pratiquement 360° puisque l'émetteur mobile est placé, de manière excentrée, au-dessus du système de supervision de zone 4.

La figure 4c illustre un schéma simplifié d'un troisième mode de réalisation d'un système implémentant un assistant de recherche selon l'invention.

La source du signal visible 40 est constituée par une source lumineuse d'un terminal de communication 4 de type smartphone. L'assistant de recherche 1 est placé devant cette source 40. L'assistant de recherche 1 comporte un modificateur (non illustré) de direction d'émission du signal visible *sv* fournie par la source 40 devant laquelle il est placé en fonction de données relatives détectées d'un élément recherché 2 dans une zone 3 au moyen d'au moins un capteur parmi un capteur audio et un capteur vidéo.

Notamment, l'assistant de recherche 1 et le terminal de communication 4 sont connectés avec (USB, etc.) ou sans fil (Bluetooth, NFC, etc.). Ainsi, l'utilisateur U effectue une demande de recherche d'un élément 2 dans la zone 3 sur le terminal de communication, soit par saisie sur un clavier ou un écran tactile 47, soit par commande vocale et/ou utilisation d'image préalablement capturée de l'élément recherché stockée dans une galerie d'images du terminal de communication 4.

Eventuellement, le terminal de communication implémente un détecteur 13 et/ou un analyseur de données captées (non illustré) par différents capteurs, tels que des microphones 45_{M}, caméras 45_{C}, etc. Notamment, le terminal de communication comporte un émetteur et un récepteur apte à communiquer avec l'élément recherché 2 qui fournira au terminal 4 sa position. Le terminal de communication 4 fournit alors à l'assistant de recherche 1 des informations relatives à la position déterminées par le détecteur/analyseur de l'élément recherché 2.

Le cas échéant, l'assistant de recherche 1 contrôle alors en fonction de la position déterminée de l'élément recherché 2 le modificateur de direction (par exemple une ou plusieurs lentilles) et dévie ainsi le signal visible sv émis par la source 40. Le signal visible dévié pointe alors sur l'élément recherché 2.

L'avantage de cet assistant de recherche 1 est qu'il s'agit d'un objet connecté simple puisqu'il réutilisé des dispositifs déjà implémentés par nos terminaux de communication, smartphones, tablettes, etc.

Eventuellement, le détecteur et/ou l'analyseur seront implémentés par un processeur du terminal de communication exécutant un procédé de détection et/ou d'analyse préalablement chargé dans le terminal de communication sous la forme d'un logiciel.

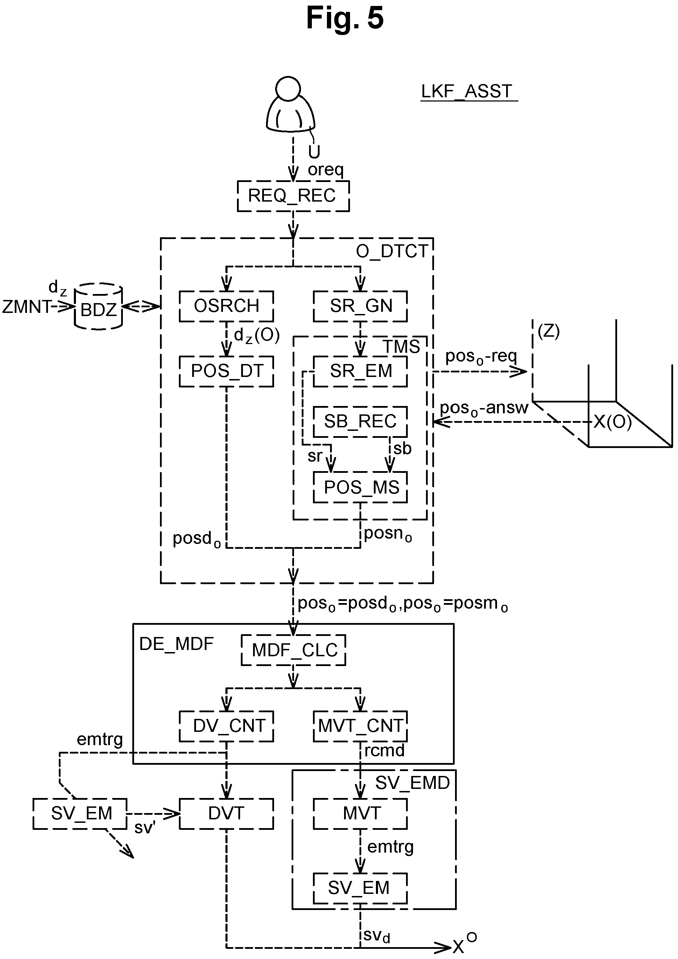

La figure 5 illustre un schéma-bloc simplifié d'un procédé d'assistance de recherche selon l'invention.

Un procédé d'assistance de recherche LKF_ASST d'un élément 2 dans une zone 3. Le procédé d'assistance de recherche comportant une modification de direction d'émission DE_MDF d'un signal visible *sv* en fonction de données relatives détectées d'un élément O recherché dans une zone Z au moyen d'au moins un capteur parmi un capteur audio et un capteur vidéo.

En particulier, le procédé d'assistance de recherche LKF_ASST comporte en outre une détection de l'élément recherché O_DTCT fournissant au moins un paramètre relatif à une position de l'élément recherché poso.

En particulier, le procédé d'assistance de recherche LKF_ASST comporte une détection de l'élément recherché O_DTCT. La détection est d'un mode déterminé en fonction du type d'élément recherché O et fournissant au moins paramètre relatif à une position de l'élément recherché poso.

En particulier, le procédé d'assistance de recherche LKF_ASST comporte une détection de l'élément recherché O_DTCT commandant la modification de direction du signal visible émis DE_MDF.

Dans un mode de réalisation particulier, le procédé d'assistance de recherche est mis en œuvre en utilisant un programme comprenant des instructions de code de programme pour l'exécution des étapes du procédé d'assistance de recherche d'un élément selon l'invention lorsque ledit programme est exécuté par un processeur.

En particulier, un utilisateur U recherche un élément O, par exemple un objet, dans une zone prédéterminée. L'utilisateur U formule sa demande de recherche d'objet oreq au procédé d'assistance de recherche LK_ASST soit par saisie sur un clavier, un écran tactile, ..., soit par commande vocale, etc.

En particulier, le procédé d'assistance de recherche LK_ASST comporte une réception de requête REQ_REC permettant notamment de recevoir une demande de recherche d'élément oreq formulée par un utilisateur U ou un dispositif électronique (non illustré) distinct de l'assistant de recherche mettant en œuvre le procédé d'assistance de recherche LK_ASST.

En particulier, la détection O_DTCT comporte une recherche d'objet OSRCH dans une base de surveillance de la zone BDZ. Notamment, un procédé de supervision de la zone ZMNT surveille au moins un élément de la zone. Les éléments surveillés par le procédé de supervision de la zone ZMNT sont au moins un élément parmi les suivants : un dispositif électronique, un dispositif de communication, un objet, etc. Le procédé de supervision de la zone ZMNT enregistre dans la base de surveillance de la zone BDZ des données relatives aux éléments surveillés : position de l'élément, état de l'élément, etc. En particulier, la recherche d'objet OSRCH requiert directement à un procédé de supervision de la zone ZMNT des données relatives à l'élément recherché. La recherche d'objet OSRCH fournit alors soit des données relatives à l'objet recherché dans la zone d_{Z}(O), soit directement des données relatives à la position de l'objet recherché dans la zone posdo. Dans le cas où la recherche d'objet OSRCH ne fournit pas de données relatives à la position recherché, le procédé d'assistance de recherche LK_ASST comporte notamment une détermination de position POS_DT qui détermine à partir des données relatives à l'objet recherché obtenues directement ou indirectement d'un procédé de supervision de la zone ZMNT des données relatives à la position recherché posd_{O}.

En particulier, la détection O_DTCT comporte une réception SB_REC d'un signal sb, pos_{O}_answ provenant de l'objet recherché O. Eventuellement, le signal reçu *sb*, posO_answ est un parmi les signaux suivants : soit une réflexion par l'objet recherché d'au moins une partie d'un signal de recherche préalablement émis *sr,* soit une réponse pos_{O}_answ du dispositif électronique constituant l'objet recherché O suite à une réception par l'objet d'une requête de position poso_req.

En particulier, la détection O_DTCT comporte une émission SR_EM d'un signal sr, pos_{O}_req dans la zone Z. Eventuellement, le signal émis *sr*, posO_req est un parmi les signaux suivants : soit un signal srapte à être réfléchi par l'objet recherché, soit une requête de position pos_{O}_req au dispositif électronique constituant l'objet recherché O. Ensuite, la détection O_DTCT comporte une réception SB_REC d'un signal sb, pos_{O}_answ provenant de l'objet recherché O. Eventuellement, le signal reçu sb, posO_answ est un parmi les signaux suivants : soit une réflexion par l'objet recherché d'au moins une partie d'un signal de recherche préalablement émis *sr,* soit une réponse pos_{O}_answ du dispositif électronique constituant l'objet recherché O suite à une réception par l'objet d'une requête de position pos_{O}_req.

En particulier, la détection O_DTCT comporte une génération d'un signal de recherche SR_GN préalablement à l'émission du signal de recherche SR_EM.

En particulier, la détection O_DTCT comporte une mesure de position POS_MS en fonction du signal reçu *sb,* et éventuellement du signal de recherche émis *sr.* La mesure de position POS_MS fournit alors la position mesurée de l'objet posmo.

Ainsi, la modification de direction d'émission du signal visible DE_MDF est fonction notamment de la position déterminée posdo suite à la recherche d'objet OSRCH ou de la position mesurée posmo.

En particulier, la modification de direction d'émission du signal visible DE_MDF comporte un calcul de modification MDF_CLC fournissant en fonction de données relatives à la position de l'objet recherché O soit une direction modifiée, soit un écart de direction à appliquer pour modifier la direction du signal visible.

En particulier, la modification de direction d'émission du signal visible DE_MDF comporte soit un contrôle de déviation DV_CNT, soit un contrôle de mouvement MVT_CNT contrôlant respectivement une déviation DVT optique du signal visible émis *sv*, ou une mobilité d'une émission mobile SV_EMO d'un signal visible. Notamment, l'assistance de recherche LKF_ASST comporte respectivement la déviation DVT, une émission mobile d'un signal visible SV_EMO.

Dans le cas d'une modification de direction d'émission du signal visible DE_MDF comportant un contrôle de déviation DV_CNT, le contrôle DV_CNT déclenche *emtrg* une émission SV_EM du signal visible sv' mise en œuvre notamment par l'assistance de recherche LKF_ASST. La déviation DVT modifie la direction du signal visible émis *sv*' et fournit un signal visible dévié *sv* pointant sur l'objet recherché.

Dans le cas d'une modification de direction d'émission du signal visible DE_MDF comportant un contrôle de mobilité d'émission mobile MVT_CNT, le contrôle MVT_CNT commande *rcmd* notamment un déplacement MVT, par exemple une rotation, soit d'un support d'un émetteur fixe de signal visible, soit directement d'un émetteur mobile de signal visible. Eventuellement, le déplacement MVT déclenche *emtrg* l'émission d'un signal visible SV_EM. En particulier, l'émission mobile SV_EMO comporte le déplacement MVT et l'émission d'un signal visible SV_EM. Ainsi, le signal visible émis *sv* point sur l'objet recherché O.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Assistant de recherche d'un élément dans une zone, l'assistant de recherche comportant un modificateur de direction d'émission d'un signal visible en fonction de données relatives détectées d'un élément recherché dans la zone au moyen d'au moins un capteur parmi un capteur audio et un capteur vidéo.

2. Assistant de recherche selon la revendication précédente, dans lequel le modificateur de direction est un ou plusieurs des dispositifs suivants :
- un support mobile en rotation apte à recevoir un émetteur fixe du signal visible, le support mobile étant apte à modifier la position de l'émetteur fixe,
- un dispositif optique apte à modifier la direction du signal visible en fonction de l'élément recherché dans la zone.

3. Assistant de recherche selon l'une quelconque des revendications précédentes, dans lequel le modificateur de direction est configuré pour permettre une mobilité en rotation de la direction d'émission du signal visible, la mobilité en rotation est l'une des mobilités en rotation suivantes :
- une mobilité en rotation par rapport à un ou plusieurs axes donnés ;
- une mobilité en rotation par rapport à un point.

4. Assistant de recherche selon l'une quelconque des revendications précédentes, dans lequel au moins un paramètre du signal visible émis est fonction d'au moins un paramètre relatif à l'élément recherché.

5. Assistant de recherche selon l'une quelconque des revendications précédentes, dans lequel l'assistant de recherche comporte un contrôleur de la rotation d'un émetteur mobile en fonction d'un élément recherché dans la zone.

6. Assistant de recherche selon l'une quelconque des revendications précédentes, dans lequel l'assistant de recherche comporte un détecteur d'un élément recherché dans la zone, le détecteur d'élément recherché étant apte à commander une rotation d'un émetteur mobile en fonction de l'élément recherché détecté.

7. Assistant de recherche selon l'une quelconque des revendications précédentes, dans lequel l'assistant de recherche comporte un émetteur du signal visible parmi les émetteurs suivants :
- un émetteur du signal visible mobile en rotation implémentant le modificateur de direction,
- outre le modificateur de direction d'émission, un émetteur fixe du signal visible.

8. Assistant de recherche selon l'une quelconque des revendications précédentes, dans lequel le signal visible est un signal visible virtuel affiché par un casque de réalité augmenté, et l'élément recherché un élément réel d'une zone réelle.

9. Assistant vocal apte à fournir une réponse à une commande vocale, l'assistant vocal comportant en outre un modificateur de direction d'émission d'un signal visible en fonction de données relatives détectées d'un élément recherché dans une zone au moyen d'au moins un capteur parmi un capteur audio et un capteur vidéo.

10. Système de supervision d'une zone apte détecter au moins un élément dans la zone, le système de supervision comportant en outre un modificateur de direction d'émission d'un signal visible en fonction de données relatives détectées d'un élément recherché dans une zone au moyen d'au moins un capteur parmi un capteur audio et un capteur vidéo.

11. Procédé d'assistance de recherche d'un élément dans une zone avec un signal visible, le procédé d'assistance de recherche comportant une modification de direction d'émission d'un signal visible en fonction de données relatives détectées d'un élément recherché dans une zone au moyen d'au moins un capteur parmi un capteur audio et un capteur vidéo.

12. Procédé d'assistance de recherche selon la revendication précédente, dans lequel le procédé d'assistance de recherche comporte en outre une détection de l'élément recherché fournissant au moins un paramètre relatif à une position de l'élément recherché.

13. Procédé d'assistance de recherche selon l'une quelconques des revendications 11 ou 12, dans lequel le procédé d'assistance de recherche comporte une détection de l'élément recherché, la détection étant d'un mode déterminé en fonction du type d'élément recherché et fournissant au moins paramètre relatif à une position de l'élément recherché .

14. Procédé d'assistance de recherche selon l'une quelconques des revendications 11 ou 12, dans lequel le procédé d'assistance de recherche comporte une détection de l'élément recherché commandant la modification de direction du signal visible émis.

15. Programme comprenant des instructions de code de programme pour l'exécution des étapes du procédé d'assistance de recherche d'un élément selon l'une quelconque des revendications 11 à 14 lorsque ledit programme est exécuté par un processeur.
